# EUROPÄISCHE PATENTANMELDUNG

(11) **EP 0 677 677 A2**
(43) Veröffentlichungstag der Anmeldung: **18.10.1995**
(21) Anmeldenummer: 95103634.2
(22) Anmeldetag: 14.03.1995
(51) Int. Cl.: F16D 65/097, F16D 55/224

(54) **Vorrichtung zur Halterung der Bremsbelagträger einer Scheibenbremse**

(30) Priorität: 14.04.1994 DE 9406166 U
(71) Anmelder: BPW Bergische Achsen Kommanditgesellschaft, D-51674 Wiehl (DE)
(72) Erfinder: Flick, Joachim, D-51674 Wiehl (DE)
(74) Vertreter: Stenger, Watzke & Ring Patentanwälte

(57) **Zusammenfassung**

Die Erfindung betrifft eine Vorrichtung zur Halterung der Bremsbelagträger (9a,9i) einer Scheibenbremse, die in einem Schacht (10a) eines auf einem Bremsträger (11) in Achsrichtung verschiebbar gelagerten Bremssattels (10) angeordnet und gegen Herausfallen jeweils durch eine Haltefeder (18) gesichert sind, die durch einen lösbar am Bremssattel (10) gehaltenen Haltebügel (17) belastet sind. Um die Vorrichtung der eingangs beschriebenen Art zur Halterung der Bremsbelagträger (9a,9i) einer Scheibenbremse derart weiterzubilden, daß sich bei gleichzeitiger Reduzierung der Anzahl der Bauteile eine Vereinfachung bei der Montage ergibt, die insbesondere einen Belagwechsel ohne Raddemontage ermöglicht, wird mit der Erfindung vorgeschlagen, daß die beiden Haltefedern (18) und der Haltebügel (17) zu einem lösbar am Bremssattel (10) befestigten Bauteil zusammengefaßt sind.

## Beschreibung

Die Erfindung betrifft eine Vorrichtung zur Halterung der Bremsbelagträger einer Scheibenbremse, die in einem Schacht eines auf einem Bremsträger in Achsrichtung verschiebbar gelagerten Bremssattels angeordnet und gegen Herausfallen jeweils durch eine Haltefeder gesichert sind, die durch einen lösbar am Bremssattel gehaltenen Haltebügel belastet sind.

Derartige Halterungsvorrichtungen sind in verschiedenen Ausführungen bekannt. Bei allen Konstruktionen werden die Haltefedern mit dem jeweiligen Bremsbelagträger verbunden, bevor der Haltebügel angebracht wird, durch den die Haltefedern belastet und gemeinsam mit den Bremsbelagträgern gegen Herausfallen aus dem Schacht des Bremssattels gesichert werden.

Die bekannten Halterungsvorrichtungen haben den Nachteil, daß mehrere Bauteile zur Sicherung der Bremsbelagträger im Schacht des Bremssattels erforderlich sind und daß sich hierdurch eine etwas umständliche Montage ergibt, so daß bei einem Austausch verschlissener Bremsbeläge durch einen Wechsel der Bremsbelagträger eine Demontage des jeweiligen Rades erforderlich ist.

Der Erfindung liegt die **Aufgabe** zugrunde, die Vorrichtung der eingangs beschriebenen Art zur Halterung der Bremsbelagträger einer Scheibenbremse derart weiterzubilden, daß sich bei gleichzeitiger Reduzierung der Anzahl der Bauteile eine Vereinfachung bei der Montage ergibt, die insbesondere einen Belagwechsel ohne Raddemontage ermöglicht.

Die **Lösung** dieser Aufgabenstellung durch die Erfindung ist dadurch gekennzeichnet, daß die beiden Haltefedern und der Haltebügel zu einem lösbar am Bremssattel befestigten Bauteil zusammengefaßt sind.

Durch diese erfindungsgemäße Weiterbildung der bekannten Halterungsvorrichtung wird es möglich, das aus Haltefedern und Haltebügel bestehende Bauteil auf einfache Weise vom Bremssattel zu lösen und die mit verschlissenen Bremsbelägen versehenen Bremsbelagträger gegen neue Bremsbelagträger zu tauschen, ohne daß das betroffene Rad demontiert werden muß. Außer einer Reduzierung der notwendigen Einzelteile ergibt sich somit eine erhebliche Vereinfachung bei der Montage und Demontage der Halterungsvorrichtung.

Gemäß einem weiteren Merkmal der Erfindung kann eine beide Bremsbelagträger sichernde, die gesamte axiale Breite des im Bremssattel ausgebildeten Schachtes überdeckende Haltefeder an einem in Achsrichtung verlaufenden Haltebügel befestigt sein. Hierdurch ergibt sich neben einer weiteren Konstruktionsvereinfachung ein Schutz der Bremsbeläge vor Spritzwasser und Schmutz. Bei einer bevorzugten Ausführungsform der Erfindung sind die Haltefeder und der Haltebügel einstückig ausgebildet, vorzugsweise aus einem geeigneten Federstahl.

Um das Einsetzen und Lösen der erfindungsgemäßen Haltevorrichtung zu vereinfachen, wird mit der Erfindung schließlich vorgeschlagen, den Haltebügel mit seinem in Achsrichtung außenliegenden Ende in eine Aussparung des Bremssattels einzuhängen und mit seinem innenliegenden, hakenartig ausgebildeten Ende durch einen herausnehmbaren Sicherungsstift am Bremssattel festzulegen. Durch diese erfindungsgemäße Weiterbildung ergibt sich ein guter Zugang zum Sicherungsstift, so daß das Entfernen und Wiedereinsetzen der Halterungsvorrichtung zum Zwecke des Wechsels der Bremsbelagträger weiter vereinfacht wird.

Auf der Zeichnung sind zwei Ausführungsbeispiele der erfindungsgemäßen Halterungsvorrichtung dargestellt, und zwar zeigen:
- Fig. 1: einen Schnitt durch eine mit einer Scheibenbremse versehene Radlagerung mit einem ersten Ausführungsbeispiel der erfindungsgemäßen Halterungsvorrichtung für die Bremsbelagträger,
- Fig. 2: eine vergrößert dargestellte Seitenansicht der Halterungsvorrichtung,
- Fig. 3: einen Querschnitt gemäß der Schnittlinie III - III in Fig. 2,
- Fig. 4: eine der Fig. 2 entsprechende Ansicht einer zweiten Ausführungsform der Halterungsvorrichtung und
- Fig. 5: einen Schnitt gemäß der Schnittlinie V - V in Fig. 4.

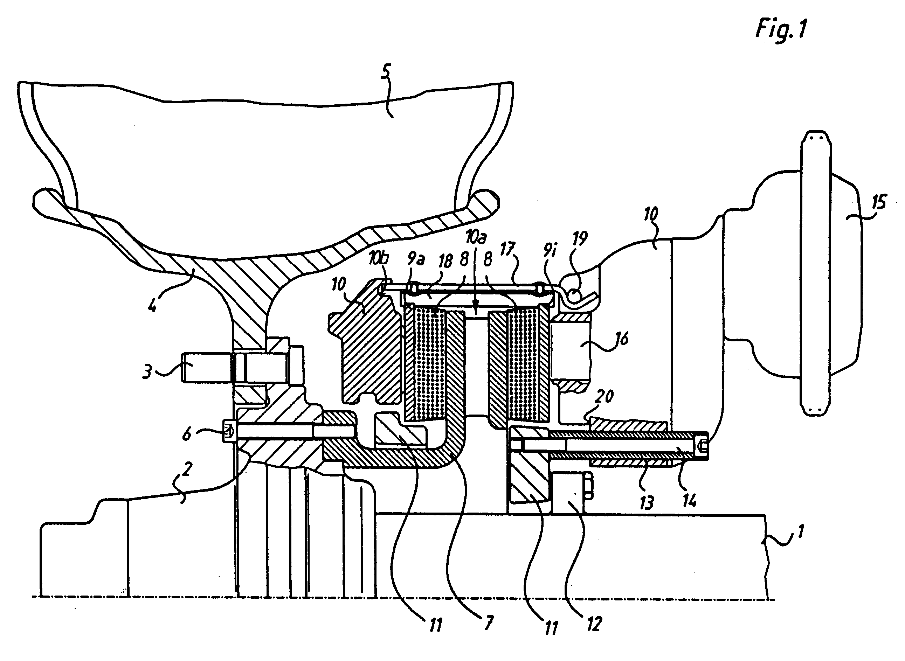

Die in Fig. 1 dargestellte Radlagerung zeigt einen Teil eines Achskörpers 1, an dem eine Radnabe 2 drehbar gelagert ist. Die Radnabe 2 ist mit Radbolzen 3 zur Befestigung eines aus Felge 4 und Reifen 5 bestehenden Rades versehen.

An der Innenseite der Radnabe 2 ist mittels Befestigungsschrauben 6 eine Bremsscheibe 7 angeschraubt, die als innenbelüftete Ausführung dargestellt ist. Auf die einander gegenüberliegenden Bremsflächen der Bremsscheibe 7 wirken Bremsbeläge 8 ein, die jeweils an einem außenliegenden Bremsbelagträger 9a bzw. einem innenliegenden Bremsbelagträger 9i angeordnet sind.

Diese Bremsbelagträger 9a und 9i sind in einem Schacht 10a eines Bremssattels 10 angeordnet, der auf Gleitführungen eines Bremsträgers 11 in Achsrichtung verschiebbar geführt ist. Der Bremsträger 11 ist an einem Träger 12 des Achskörpers 1 befestigt.

Beim dargestellten Ausführungsbeispiel bestehen die Gleitführungen jeweils aus einer Führungsbuchse 13, die mittels einer Zylinderschraube 14 an der innenliegenden Stirnfläche des Bremsträgers 11 befestigt ist. Auf diesen Führungsbuchsen 13 ist der mit entsprechenden Bohrungen versehene Bremssattel 10 in Achsrichtung verschiebbar, wobei bei der praktischen Ausgestaltung die Lagerflächen des Bremssattels als Führungshülse ausgebildet sind.

An der innenliegenden Seite des Bremssattels 10 ist ein Bremszylinder 15 angeordnet, dessen Kolben 16 unmittelbar auf den innenliegenden Bremsbelagträger 9i und durch die Reaktionskraft über den Bremssattel 10 mittelbar auf den außenliegenden Bremsbelagträger 9a einwirkt.

Um die Bremsbelagträger 9a und 9i gegen Herausfallen aus dem Schacht 10a des Bremssattels 10 zu sichern, ist der Bremssattel 10 an seiner Oberseite mit einem Haltebügel 17 versehen, an dem eine breite, auf beide Bremsbelagträger 9a und 9i einwirkende Haltefeder 18 befestigt ist. Diese Haltefeder 18 überdeckt nahezu die gesamte axiale Breite des im Bremssattel 10 ausgebildeten Schachtes 10a und ergibt somit einen guten Schutz gegen Eindringen von Spritzwasser und Schmutz in den Schacht 10a und damit in den Bereich der Bremsbeläge 8.

Der Haltebügel 17 ist mit seinem in Achsrichtung außenliegenden Ende in eine Nut 10b des Bremssattels 10 eingehängt. Mit seinem innenliegenden, hakenartig ausgebildeten Ende wird der Haltebügel 16 durch einen Sicherungsstift 19 lösbar am Bremssattel 10 befestigt. Dieser Sicherungsstift 19 ist auch ohne Demontage des Rades gut zugänglich, so daß der mit der Haltefeder 18 zu einem gemeinsamen Bauteil zusammengefaßte Haltebügel 17 auf einfache Weise montiert und demontiert werden kann.

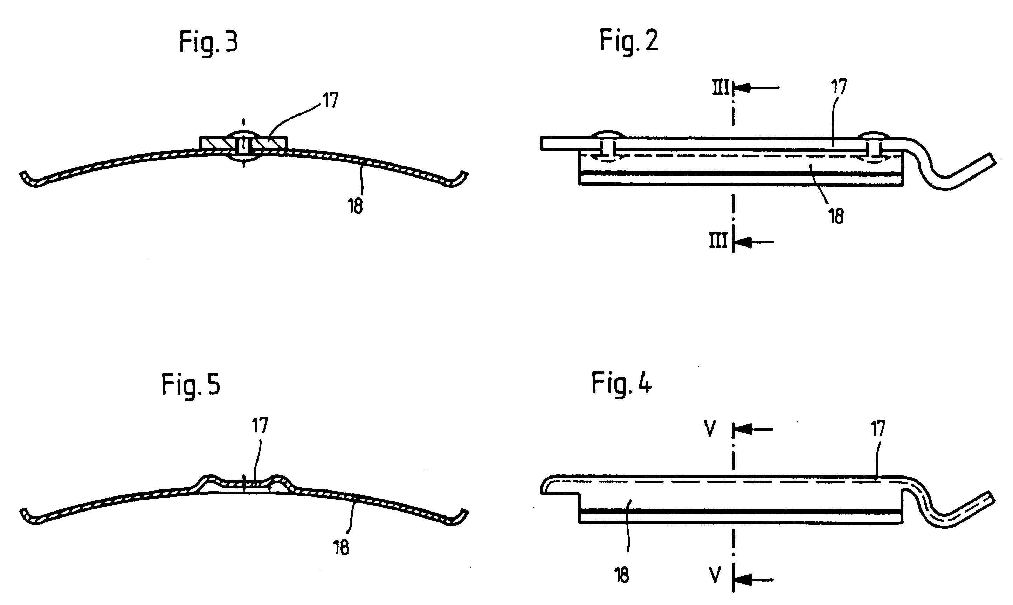

Während die Fig. 2 und 3 eine breite Haltefeder 18 zeigen, die mittels zweier Nieten an einem streifenförmigen Haltebügel 17 befestigt ist, zeigen die Fig. 4 und 5 eine zweite Ausführungsform, bei der die Haltefeder und der Haltebügel zu einem einstückigen Bauteil zusammengefaßt sind. Dieses Bauteil wird vorzugsweise aus Federstahl hergestellt.

### Bezugszeichenliste:

- 1: Achskörper
- 2: Radnabe
- 3: Radbolzen
- 4: Felge
- 5: Reifen
- 6: Befestigungsschraube
- 7: Bremsscheibe
- 8: Bremsbelag
- 9a: Bremsbelagträger
- 9i: Bremsbelagträger
- 10: Bremssattel
- 10a: Schacht
- 10b: Nut
- 11: Bremsträger
- 12: Träger
- 13: Führungsbuchse
- 14: Zylinderschraube
- 15: Bremszylinder
- 16: Kolben
- 17: Haltebügel
- 18: Haltefeder
- 19: Sicherungsstift

## Patentansprüche

1. Vorrichtung zur Halterung der Bremsbelagträger einer Scheibenbremse, die in einem Schacht eines auf einem Bremsträger in Achsrichtung verschiebbar gelagerten Bremssattels angeordnet und gegen Herausfallen jeweils durch eine Haltefeder gesichert sind, die durch einen lösbar am Bremssattel gehaltenen Haltebügel belastet sind,
**dadurch gekennzeichnet,**
daß die beiden Haltefedern (18) und der Haltebügel (17) zu einem lösbar am Bremssattel (10) befestigten Bauteil zusammengefaßt sind.

2. Vorrichtung nach Anspruch 1, dadurch gekennzeichnet, daß eine beide Bremsbelagträger (9a,9i) sichernde, die gesamte axiale Breite des im Bremssattel (10) ausgebildeten Schachtes (10a) überdeckende Haltefeder (18) an einem in Achsrichtung verlaufenden Haltebügel (17) befestigt ist.

3. Vorrichtung nach Anspruch 2, dadurch gekennzeichnet, daß die Haltefeder (18) und der Haltebügel (17) einstückig ausgebildet sind.

4. Vorrichtung nach mindestens einem der Ansprüche 1 bis 3, dadurch gekennzeichnet, daß der Haltebügel (17) mit seinem in Achsrichtung außenliegenden Ende in eine Nut (10b) des Bremssattels (10) eingehängt und mit seinem innenliegenden, hakenartig ausgebildeten Ende durch einen herausnehmbaren Sicherungsstift (19) am Bremssattel (10) festgelegt ist.
